# EUROPEAN PATENT SPECIFICATION

(11) **EP 3 779 287 B1**
(45) Date of publication and mention of the grant of the patent: **31.01.2024**
(21) Application number: 18911701.3
(22) Date of filing: 28.12.2018
(51) Int. Cl.: F24F 1/0007, F24F 13/20, F24F 7/08, F24F 1/005, F24F 12/00, F24F 13/28, F24F 13/08, F24F 1/0035, F24F 1/0038

(54) **AIR-CONDITIONING INDOOR UNIT AND AIR CONDITIONER HAVING SAME**
KLIMAANLAGENINNENRAUMEINHEIT UND KLIMAANLAGE DAMIT
UNITÉ D'INTÉRIEUR DE CLIMATISATION ET CLIMATISEUR LA COMPORTANT

(30) Priority: 30.03.2018 CN 201810291661
(43) Date of publication of application: 17.02.2021
(73) Proprietor: Gree Electric Appliances, Inc. of Zhuhai, Zhuhai, Guangdong 519070 (CN)
(72) Inventor: JIA, Feifei, Zhuhai City, Guangdong 519070 (CN); ZENG, Hui, Zhuhai City, Guangdong 519070 (CN); LIN, Yuliang, Zhuhai City, Guangdong 519070 (CN); JIN, Haiyuan, Zhuhai City, Guangdong 519070 (CN); CHEN, Shengwen, Zhuhai City, Guangdong 519070 (CN); ZENG, Qinghe, Zhuhai City, Guangdong 519070 (CN); FU, Kaikai, Zhuhai City, Guangdong 519070 (CN); LIU, Heming, Zhuhai City, Guangdong 519070 (CN); LIU, Shengbei, Zhuhai City, Guangdong 519070 (CN); WANG, Chaoxin, Zhuhai City, Guangdong 519070 (CN); YANG, Chunxia, Zhuhai City, Guangdong 519070 (CN); ZENG, Wenxuan, Zhuhai City, Guangdong 519070 (CN)
(74) Representative: Zacco GmbH
(86) International application number: PCT/CN2018/125021
(87) International publication number: WO 2019/184504

(56) References cited:
- WO-A1-2004/076941
- WO-A1-2012/050294
- CN-A- 106 196 358
- CN-A- 106 765 650
- CN-A- 107 525 169
- CN-A- 107 525 169
- CN-U- 208 237 999
- CN-U- 208 238 006
- JP-A- H10 220 841
- KR-A- 20030 030 473
- KR-A- 20060 013 963
- KR-A- 20110 127 966
- KR-B1- 100 539 592

## Description

### Technical Field

The present invention relates to a field of household electrical appliances, and in particular to an air conditioner indoor unit and an air conditioner with the air conditioner indoor unit.

### Background

In recent years, with a rapid development of economy and accelerating process of urbanization, an atmospheric pollution is becoming more and more serious. An increase of the PM2.5 concentration directly results in frequent occurrence of a hazy weather, makes a fog toxic and greatly increases the harmful substance, all of which pose a serious threat to a health of human beings. Under such a circumstance, al household comfortable air conditioner known to inventors cannot satisfy a requirement of people, and a health, comfort and environmental protection have become development objectives of an air conditioner.

For an air conditioner known to inventors, in order to ensure the effect, an air conditioner room must be sealed necessarily. As a result, dust, fog, bacteria, virus and waste gas in the room are unceasingly increased, a content of oxygen is continuously reduced, and an air quality becomes increasingly poor.

Recently, while an "air-conditioner disease" draws more and more attentions, people have been asked not to stay for a long time in an air-conditioner room; and it is required to open a window to charge fresh air or exhaust an indoor air to form a negative pressure, thus supplementing the fresh air to a room in a manner of leaking from a gap on a door and a window to improve an indoor environment.

At present, there are mainly two ways for exchanging new and old air on a market:
I. An indoor air is exhausted out of the room by a single fan to form a negative pressure region in the room, thus forcing an outdoor fresh air to flow into the room from a gap of the room.
II. The outdoor fresh air is directly drawn to the room.

The above two ways have a problem of energy wastage due to a fact that direct drawing of the outdoor cold and hot air is bound to lead to a change of an indoor temperature, cause a large amount of energy wastage, increase an energy loss of an air conditioner and decrease a refrigerating and heating effect of the air conditioner. Particularly in winter, an entry of the outdoor cold air even leads to a condensation phenomenon of the air conditioner. Moreover, the above two ways have a problem that polluted air enters the room without filtration; and in case of a severe hazy weather out of the room, directly drawing an outdoor air will lead to more serious pollution in the room.

Additionally, the air conditioner known to inventors only has refrigerating and heating functions, fails to address an air change problem and is often used with a fresh air device cooperatively. In a case where a window of the fresh air device is not opened, fresh air comes in and dirty air comes out, thus keeping fresh air in the room. However, due to a cooperative use, the fresh air device occupies a large space, thus being very inconvenient. Furthermore, as the fresh air device has a short air delivery distance, an air change effect within short time is not obvious.

The document CN107525169A discloses an air processing module and an air conditioner. The air processing module is used for the air conditioner and comprises a shell and an air outlet air wheel. The shell is provided with an indoor air inlet, an indoor air outlet and an air outlet air flue through which the indoor air inlet communicates with the indoor air outlet. The air outlet air flue and a heat exchange air flue of the air conditioner are independent of each other. The air outlet air wheel is arranged in the air outlet air flue so that indoor air can enter from the indoor air inlet, and after air passes through the air outlet air flue, the air is discharged out of the indoor air outlet. According to the technical scheme, the updating speed of the indoor air can be increased.

### Summary

The invention is defined in the claims. Some embodiments of the present invention provide an air conditioner indoor unit and an air conditioner with the air conditioner indoor unit, solving a problem of poor air change effect of the air conditioner in an art known to inventors.

According to the invention, an air conditioner indoor unit is provided, which includes a main housing, and a fresh air device and a refrigerating-heating device that are disposed in the main housing; the refrigerating-heating device is provided with an air inlet side for entering air; wherein the air conditioner indoor unit further includes: a guide part; wherein the guide part is communicated with the fresh air device, such that fresh air flowing out from the fresh air device enters the guide part, and the guide part guides fresh air to the air inlet side of the refrigerating-heating device.

The main housing comprises an air inlet panel, wherein the air inlet panel corresponds to the air inlet side of the refrigerating-heating device. The air inlet panel is extended along a vertical direction, wherein the air outlet of the guide part is located on a lower end of the air inlet panel. The air outlet of the guide part is provided upwards, such that fresh air blown out from the air outlet of the guide part is flowed parallel to the air inlet panel; wherein an air outlet of the guide part is located outside the air inlet panel, such that fresh air flowed out from the guide part enters the refrigerating-heating device through the air inlet panel.

In some embodiments of the invention, the fresh air device includes: a fresh air housing and a heat exchange core body, a fresh air passage and a dirty air passage are disposed in the fresh air housing, and a fresh air inlet and a fresh air outlet that are communicated with the fresh air passage are disposed on the fresh air housing, a dirty air inlet and a dirty air outlet that are communicated with the dirty air passage are disposed on the fresh air housing; the heat exchange core body is disposed in the fresh air housing, and the heat exchange core body is communicated with the fresh air passage and the dirty air passage, such that fresh air located in the fresh air passage and dirty air located in the dirty air passage exchange heat in the heat exchange core body; wherein the guide part is communicated with the fresh air outlet, such that fresh air flowing out from the fresh air outlet is flows to the air inlet side of the refrigerating-heating device through the guide part.

In some embodiments, the guide part includes a leading-out portion and a traction portion, wherein, the leading-out portion is disposed in the main housing, the traction portion is disposed outside the main housing, and the traction portion is communicated with the leading-out portion.

In some embodiments, an end of the traction portion away from the leading-out portion is provided with a traction outlet, the traction outlet is the air outlet of the guide part, and fresh air in the guide part flows out from the traction outlet.

In some embodiments, the air conditioner indoor unit includes a grille disposed at the traction outlet, and the grille is configured to adjust a direction that fresh air flows out from the guide part.

In some embodiments, the air conditioner indoor unit includes a filter device disposed at the traction outlet, and the filter device is configured to filter the fresh air flowing out from the fresh air device.

In some embodiments, the main housing includes an air inlet panel, the air conditioner indoor unit further includes a flow baffle, the flow baffle is opposite to the air inlet panel, and a fresh air inlet passage is formed between the flow baffle and the air inlet panel.

According to another embodiment of the present invention, an air conditioner is provided, which includes an air conditioner indoor unit and an air conditioner outdoor unit connected with the air conditioner indoor unit through a pipeline; wherein the air conditioner indoor unit is the above-mentioned air conditioner indoor unit.

By communicating the guide part with the fresh air device, fresh air flowing out from the fresh air device enters the guide part, and the guide part guides fresh air to the air inlet side of the refrigerating-heating device, such that fresh air enters a room after being heated or refrigerated by the refrigerating-heating device; and therefore, the air change is accomplished, a problem of heating or refrigerating fresh air is further addressed, and the problem of poor air change effect of the air conditioner in the art known to inventors is solved.

### Brief Description of the Drawings

The accompanying drawings disclosing some embodiments of the present invention are described here to provide a further understanding of the invention. The schematic embodiments and description of the present invention are adopted to explain the present invention, and do not form improper limits to the present invention which is defined in the claims.

In the drawings:
Fig. 1 illustrates an overall front view of an air conditioner indoor unit according to some embodiments of the present invention.
Fig. 2 illustrates a side view of an air conditioner indoor unit in Fig. 1.
Fig. 3 illustrates a top view of an air conditioner indoor unit in Fig. 1.
Fig. 4 illustrates a breakdown diagram of an internal structure of an air conditioner indoor unit according to some embodiments of the present invention.
Fig. 5 illustrates a front view of an internal structure of an air conditioner indoor unit of some embodiments of the present invention.
Fig. 6 illustrates a side view of an internal structure of an air conditioner indoor unit of some embodiments of the present invention.
Fig. 7 illustrates a rear view of an internal structure of an air conditioner indoor unit of the present invention.
Fig. 8 illustrates a top view of an internal structure of an air conditioner indoor unit of some embodiments of the present invention.
Fig. 9 illustrates a structural schematic diagram of a traction portion of an air conditioner indoor unit according to some embodiments of the present invention.
Fig. 10 illustrates a top view of a structure of a traction portion in Fig. 9.

The drawings include the following reference signs:
10. main housing; 11. air inlet panel; 12. front panel; 13. fresh air panel; 14. chassis; 20. fresh air device; 30. fresh air housing; 31. fresh air passage; 311. fresh air inlet; 312. fresh air outlet; 32. dirty air passage; 321. dirty air inlet; 322. dirty air outlet; 33. fresh air duct part; 40. heat exchange core body; 50. guide part; 51. leading-out portion; 52. traction portion; 521. traction outlet; 53. grille; 54. filter device; 60. refrigerating-heating device; 70. water receiving disk part; and 80. electrical appliance case part.

### Detailed Description of the Embodiments

It is to be noted that the embodiments of the present invention and the characteristics of the embodiments are combined with each other if there is no conflict. The present invention is described below in detail with reference to the accompanying drawings and in combination with the embodiments.

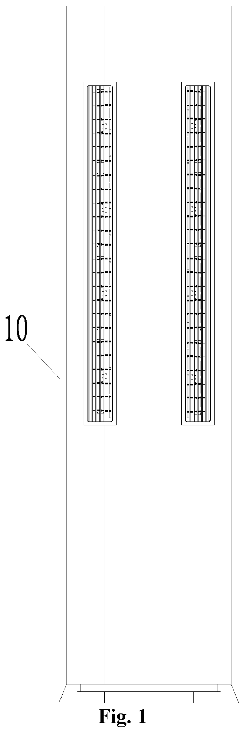

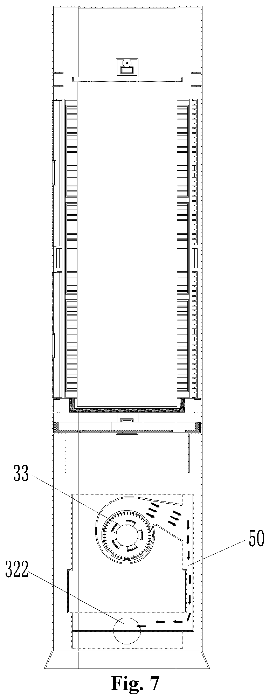

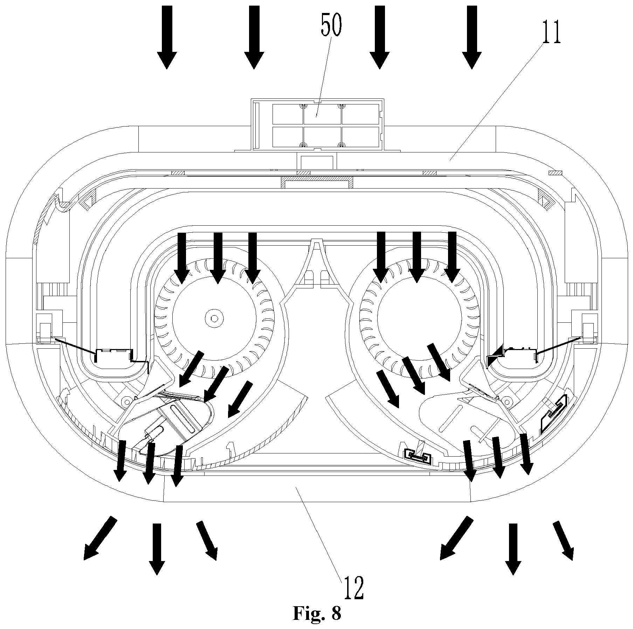

The present invention provides an air conditioner indoor unit. Referring to Fig. 1 to Fig. 10, the air conditioner indoor unit includes a main housing 10, and a fresh air device 20 and a refrigerating-heating device 60 that are disposed in the main housing 10; the refrigerating-heating device 60 is provided with an air inlet side for entering air; the air conditioner indoor unit further includes: a guide part 50; wherein the guide part 50 communicates with the fresh air device 20, such that fresh air flowing out from the fresh air device 20 enters the guide part 50, and the guide part 50 guides fresh air to the air inlet side of the refrigerating-heating device 60.

The air conditioner indoor unit provided by some embodiments of the present invention includes the main housing 10, and the fresh air device 20 and the refrigerating-heating device 60 that are disposed in the main housing 10, the refrigerating-heating device 60 is disposed above the fresh air device 20, the refrigerating-heating device 60 is provided with the air inlet side for entering the air, and air enters the refrigerating-heating device from the air inlet side of the refrigerating-heating device and is blown to a room after being heated or refrigerated. In order to better integrate two functions of the fresh air device with and the refrigerating-heating device to achieve an effect of one plus one greater than two (i.e., achieve a multiplying effect), the air conditioner indoor unit according to the invention includes the guide part 50 . By communicating the guide part 50 with the fresh air device 20, fresh air flowing out from the fresh air device 20 enters the guide part 50, and the guide part 50 guides fresh air to the air inlet side of the refrigerating-heating device 60, such that fresh air enters a room after being heated or refrigerated by the refrigerating-heating device; and therefore, the air change is accomplished, a problem of heating or refrigerating the fresh air is further addressed, and the problem of poor air change effect of the air conditioner in the art known to inventors is solved.

The fresh air device 20 includes: a fresh air housing 30 and a heat exchange core body 40; a fresh air passage 31 and a dirty air passage 32 are disposed in the fresh air housing 30, and a fresh air inlet 311 and a fresh air outlet 312 that are communicated with the fresh air passage 31 are disposed on the fresh air housing, as well as a dirty air inlet 321 and a dirty air outlet 322 that are communicated with the dirty air passage 32 are disposed on the fresh air housing 30; the heat exchange core body 40 is disposed in the fresh air housing 30, and the heat exchange core body 40 is communicated with the fresh air passage 31 and the dirty air passage 32, such that fresh air located in the fresh air passage 31 and dirty air located in the dirty air passage 32 are exchanged heat in the heat exchange core body 40; the guide part 50 is communicated with the fresh air outlet 312, such that fresh air flowing out from the fresh air outlet 312 is flowed to the air inlet side of the refrigerating-heating device 60 through the guide part 50.

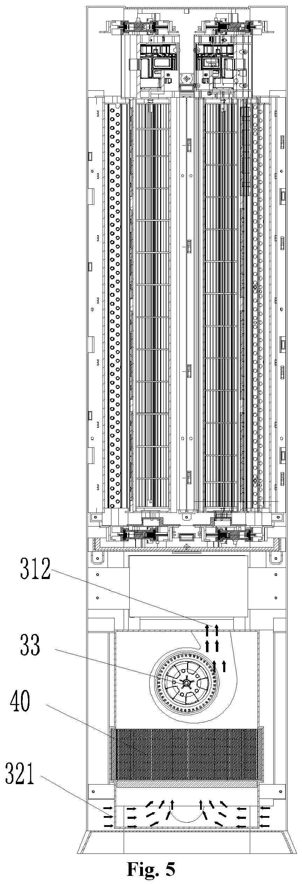

As shown in Fig. 5 to Fig. 7, in some embodiments, the fresh air device 20 is provided with the fresh air housing 30 and the heat exchange core body 40, the fresh air passage 31 and the dirty air passage 32 are disposed in the fresh air housing 30, and correspondingly, the fresh air housing 30 is provided with the fresh air inlet 311 and the fresh air outlet 312 that are communicated with the fresh air passage 31, and is further provided with the dirty air inlet 321 and the dirty air outlet 322 that are communicated with the dirty air passage 32. The heat exchange core body 40 is disposed in the fresh air housing 30, and the heat exchange core body 40 is communicated with the fresh air passage 31 and the dirty air passage 32 to implement heat exchange between the fresh air and the dirty air, thus improving the refrigerating and heating effect, and reducing a condition of energy wastage in the room due to a fact that the dirty air flows out from the room. According to the invention, by communicating the guide part 50 with the fresh air outlet 312 of the fresh air device, the fresh air is guided to the refrigerating-heating device from the guide part 50 after exchanging energy in the fresh air device, the fresh air is blown to the room through the refrigerating-heating device and thus the room obtains the refrigerated or heated fresh air.

The main housing 10 includes an air inlet panel 11, the air inlet panel 11 is corresponded to the air inlet side of the refrigerating-heating device 60, and an air outlet of the guide part 50 is located outside the air inlet panel 11, such that the fresh air flowed out from the guide part 50 enters the refrigerating-heating device 60 through the air inlet panel 11.

As shown in Fig. 1 to Fig. 4, the air inlet panel 11 is disposed on the main housing 10 according to the invention, such that the fresh air enters the air inlet side of the refrigerating-heating device from the air inlet panel 11; by providing the air inlet panel 11 corresponding to the air inlet side of the refrigerating-heating device 60, the fresh air directly enters the refrigerating-heating device from the air inlet panel. In order to flow fresh air flowed out from the fresh air device into the air inlet side of the refrigerating-heating device as much as possible, the air outlet of the guide part 50 is disposed outside the air inlet panel 11 and close to the air inlet panel according to the invention, thus ensuring that the fresh air flowed out from the guide part 50 enters the refrigerating-heating device 60 after passing through the air inlet panel 11 as much as possible.

The air inlet panel 11 is extended along a vertical direction, the air outlet of the guide part 50 is located on a lower end of the air inlet panel 11, and the air outlet of the guide part 50 is provided upwards, such that the fresh air blown out from the air outlet of the guide part 50 is flowed parallel to the air inlet panel 11.

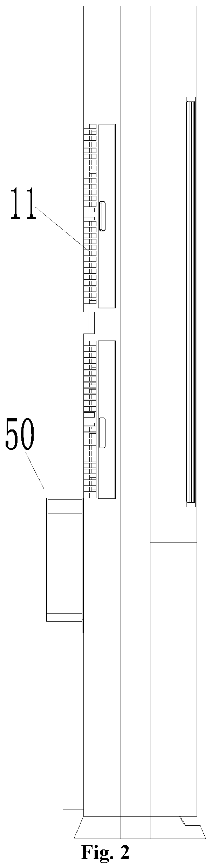

As shown in Fig. 2, in some embodiment, by providing the air outlet of the guide part 50 on the lower end of the air inlet panel 11, it is ensured that fresh air flowed out from the fresh air device enters the refrigerating-heating device at a maximum flow rate. Meanwhile, as the air inlet panel 11 is extended along the vertical direction, the air outlet of the guide part 50 is provided upwards, and fresh air blown out from the air outlet of the guide part 50 is flowed parallel to the air inlet panel 11 and enters the refrigerating-heating device under a suction force of the refrigerating-heating device.

The guide part 50 includes a leading-out portion 51 and a traction portion 52, wherein, the leading-out portion 51 is disposed in the main housing 10, the traction portion 52 is disposed outside the main housing 10, and the traction portion 52 is communicated with the leading-out portion 51.

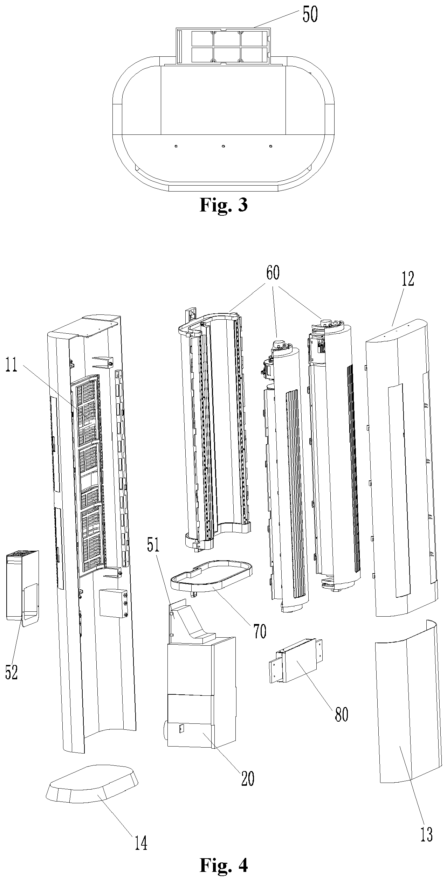

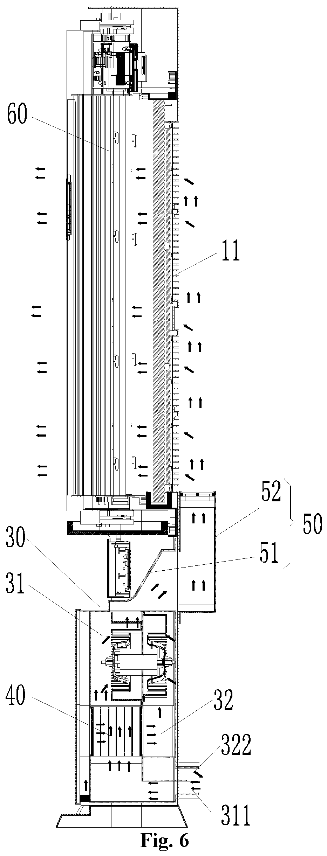

As shown in Fig. 4 and Fig. 6, in some embodiments, the guide part 50 is divided into the leading-out portion 51 and the traction portion 52, the leading-out portion 51 is disposed in the main housing 10, the leading-out portion 51 is connected with the fresh air outlet 312 of the fresh air device, the traction portion 52 is disposed outside the main housing 10, and the traction portion 52 is communicated with the leading-out portion 51. Hence, the fresh air flows out from the fresh air outlet after passing through the fresh air device to sequentially pass through the leading-out portion and the traction portion of the guide part 50.

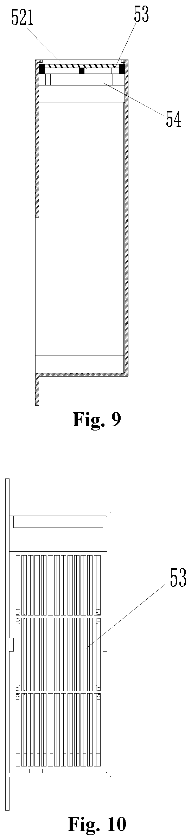

As shown in Fig. 9 and Fig. 10, an end of the traction portion 52 away from the leading-out portion 51 is provided with a traction outlet 521, the traction outlet 521 is the air outlet of the guide part 50, and fresh air in the guide part 50 flows out from the traction outlet 521.

In some embodiments, the air conditioner indoor unit includes a grille 53 disposed at the traction outlet 521, and the grille 53 is configured to adjust a direction that fresh air flows out from the guide part 50.

As shown in Fig. 9 and Fig. 10, in order that fresh air flowed out from the guide part 50 is directly blown to the air inlet panel 11, the grille 53 is disposed at the traction outlet 521 of the guide part 50 in some embodiments; and the grille 53 is configured to adjust the direction of fresh air flowed out from the guide part 50; and by tilting the grille to the air inlet panel, fresh air is blown to the air inlet panel along a tilting direction of the grille.

The air conditioner indoor unit includes a filter device 54 disposed at the traction outlet 521, and the filter device 54 is configured to filter the fresh air flowing out from the fresh air device 20.

As shown in Fig. 9, in some embodiments, the filter device 54 is further disposed at the traction outlet 521; and the fresh air flowed out from the fresh air device 20 is filtered through the filter device 54.

The main housing 10 includes an air inlet panel 11, the air conditioner indoor unit further includes a flow baffle, the flow baffle is opposite to the air inlet panel, and a fresh air inlet passage is formed between the flow baffle and the air inlet panel 11.

In some embodiments of the present invention, the flow baffle is disposed at the air outlet of the guide part. The flow baffle is an arc plate, one end of the flow baffle is fixed outside of the air outlet of the guide part (i.e., on a side of the air outlet of the guide part away from the main housing), and the other end of the flow baffle extends towards the air inlet panel, such that after fresh air flows out from the air outlet of the guide part, fresh air is blown to the air inlet panel under a guide action of the flow baffle.

In some embodiments of the present invention, the flow baffle is disposed on the main housing; and by communicating the air outlet of the guide part with the air inlet panel, the fresh air inlet passage is formed between the flow baffle and the air inlet panel to introduce fresh air to the air inlet side of the refrigerating-heating device.

Some embodiments of the present invention further provides an air conditioner, which includes an air conditioner indoor unit and an air conditioner outdoor unit connected with the air conditioner indoor unit by a pipeline; and the air conditioner indoor unit is the above-mentioned air conditioner indoor unit.

The air conditioner of some embodiments of the present invention is mainly composed of upper, lower and rear portions, the upper portion is a refrigerating-heating device, the lower portion is a fresh air device and the rear portion is a part of a guide part.

The refrigerating-heating device includes an air inlet side of the refrigerating-heating device, an evaporator part, a left air duct part, a right air duct part, a water receiving disk part 70 and an electrical appliance case part 80.

The fresh air device includes a fresh air blade, an air exhaust blade, a motor, a heat exchange core body, a filter screen, a dirty air passage and a fresh air passage.

A main housing includes an air inlet panel 11, a front panel 12, a fresh air panel 13 and a chassis 14.

The guide part includes a guide portion, a traction portion, a grille and a filter device; and a rib of the grille is formed into a certain angle with the direction of air inlet panel to guide fresh air to the air inlet panel.

The fresh air device has a following working principle:
In a working state of the fresh air device, outdoor fresh air enters from the fresh air passage under the suction of the fresh air blade, enters the heat exchange core body upon purification and disinfection of the filter screen, and is discharged from an air outlet passage of the guide part; and the indoor dirty air enters from the dirty air passage, is purified by the filter screen to enter the heat exchange core body, and is discharged out of a room from an air outlet port upon the working of the air exhaust blade. Therefore, an effect of exchanging the indoor and outdoor air is implemented.

The refrigerating-heating device has a following working principle:
In working states of the left air duct part and the right air duct part, a double cross-flow blade rotates, indoor air or fresh air enters from the air inlet panel, enters the left air duct part and the right air duct part upon a refrigerating or heating action of the evaporator part, and is discharged out from the front panel 12 with the rotation of the cross-flow blade.

Functioning of the air inlet in some embodiments of the present invention:
The refrigerating and heating source of the evaporator of the air conditioner known to inventors is indoor air. The fresh air device is used cooperatively sometimes. Nevertheless, fresh air is far away from the air inlet panel of the air conditioner, and an amount of fresh air entering the refrigerating-heating device from the air inlet panel is very small as a matter of fact. The air conditioner indoor unit of some embodiments of the present invention increases an air inlet source of the air inlet panel of the air conditioner, and the outdoor fresh air directly enters from the air inlet panel of the air conditioner, thus preventing a phenomenon that after fresh air of the fresh air device known to inventors enters the room, a part of fresh air is consumed in the air and then fresh air enters the air inlet panel of the air conditioner.

While the fresh air device and the refrigerating-heating device work at the same time, under the action of the left air duct part, the right air duct part and the double cross-flow blade, fresh air flows out continuously from the air outlet passage of the guide part and enters through the air inlet panel. The double cross-flow blade improves an air inlet range and an air outlet range of the air conditioner. Fresh air enters the cross-flow blade radially, and is discharged out with the rotation of the cross-flow blade upon the refrigerating and heating of the evaporator, such that fresh air is delivered to a far distance to implement a characteristic that an air delivery distance of the fresh air is far.

The traction portion of the guide part is designed in the main housing according to a demand on the appearance of the air conditioner.

As can be seen from the above description, the above embodiments of the present invention implement the following technical effects:
(1) Some embodiments of the present invention solve a problem of changing fresh air of the air conditioner, and improve the air change effect of the air conditioner known to inventors.
(2) Some embodiments of the present invention solve a problem of a short fresh air delivery distance of the fresh air device known to inventors. Some embodiments of the present invention provide the functioning of the air inlet of an integral total-heat fresh air conditioner; the air conditioner sucks the outdoor air in a working state; upon purification and disinfection of the fresh air device, fresh air enters an air inlet system of the refrigerating-heating device of the air conditioner directly, and implements refrigeration or heating through the evaporator; and the double cross-flow blade delivers fresh air at a far distance. Compared with the independent fresh air device, an air delivery distance is farther, and the whole room is quickly filled with the fresh air.

## Claims

1. An air conditioner indoor unit, comprising a main housing (10), and a fresh air device (20) and a refrigerating-heating device (60) that are disposed in the main housing (10), the refrigerating-heating device (60) is provided with an air inlet side for entering air, wherein the air conditioner indoor unit further comprises:
a guide part (50), wherein the guide part (50) communicates with the fresh air device (20), such that fresh air flowing out from the fresh air device (20) enters the guide part (50), and the guide part (50) guides fresh air to the air inlet side of the refrigerating-heating device (60);
wherein the main housing (10) comprises an air inlet panel (11), the air inlet panel (11) corresponds to the air inlet side of the refrigerating-heating device (60);
the air inlet panel (11) is extended along a vertical direction, the air outlet of the guide part (50) is located on a lower end of the air inlet panel (11),
**characterized in that**:
the air outlet of the guide part (50) is provided upwards, such that fresh air blown out from the air outlet of the guide part (50) is flowed parallel to the air inlet panel (11);
wherein an air outlet of the guide part (50) is located outside the air inlet panel (11), such that fresh air flowed out from the guide part (50) enters the refrigerating-heating device (60) through the air inlet panel (11).

2. The air conditioner indoor unit as claimed in claim 1, wherein the fresh air device (20) comprises:
a fresh air housing (30), wherein a fresh air passage (31) and a dirty air passage (32) are disposed in the fresh air housing (30), and a fresh air inlet (311) and a fresh air outlet (312) that are communicated with the fresh air passage (31) are disposed on the fresh air housing (30), a dirty air inlet (321) and a dirty air outlet (322) that are communicated with the dirty air passage (32) are disposed on the fresh air housing (30); and
a heat exchange core body (40), wherein the heat exchange core body (40) is disposed in the fresh air housing (30), and the heat exchange core body (40) communicates with the fresh air passage (31) and the dirty air passage (32), such that fresh air located in the fresh air passage (31) and dirty air located in the dirty air passage (32) exchange heat in the heat exchange core body (40);
wherein, the guide part (50) is communicated with the fresh air outlet (312), such that fresh air flowing out from the fresh air outlet (312) is flowed to the air inlet side of the refrigerating-heating device (60) through the guide part (50).

3. The air conditioner indoor unit as claimed in claim 1 or claim 2, wherein the guide part (50) comprises a leading-out portion (51) and a traction portion (52), wherein, the leading-out portion (51) is disposed in the main housing (10), the traction portion (52) is disposed outside the main housing (10), and the traction portion (52) communicates with the leading-out portion (51).

4. The air conditioner indoor unit as claimed in claim 3, wherein an end of the traction portion (52) away from the leading-out portion (51) is provided with a traction outlet (521), the traction outlet (521) is the air outlet of the guide part (50) so that fresh air in the guide part (50) can flow out from the traction outlet (521).

5. The air conditioner indoor unit as claimed in claim 4, wherein the air conditioner indoor unit comprises a grille (53) disposed at the traction outlet (521), and the grille (53) is configured to adjust a direction that fresh air flows out from the guide part (50).

6. The air conditioner indoor unit as claimed in claim 4, wherein the air conditioner indoor unit comprises a filter device (54) disposed at the traction outlet (521), and the filter device (54) is configured to filter fresh air flowing out from the fresh air device (20).

7. The air conditioner indoor unit as claimed in claim 1, wherein the main housing (10) comprises an air inlet panel (11), the air conditioner indoor unit further comprises a flow baffle, the flow baffle is opposite to the air inlet panel, and a fresh air inlet passage is formed between the flow baffle and the air inlet panel (11).

8. An air conditioner, comprising an air conditioner indoor unit and an air conditioner outdoor unit connected with the air conditioner indoor unit through a pipeline, wherein the air conditioner indoor unit is the air conditioner indoor unit as claimed in any one of claims 1 to 7.

## Patentansprüche

1. Klimaanlageninnenraumeinheit, umfassend ein Hauptgehäuse (10) sowie eine Frischluftvorrichtung (20) und eine Kühl-Heiz-Vorrichtung (60), die im Hauptgehäuse (10) angeordnet sind, wobei die Kühl-Heiz-Vorrichtung (60) mit einer Lufteinlassseite für eintretende Luft ausgestattet ist, wobei die Klimaanlageninnenraumeinheit ferner Folgendes umfasst:
einen Führungsteil (50), wobei der Führungsteil (50) mit der Frischluftvorrichtung (20) kommuniziert, so dass Frischluft, die aus der Frischluftvorrichtung (20) strömt, in den Führungsteil (50) eintritt, und der Führungsteil (50) Frischluft zur Lufteinlassseite der Kühl-Heiz-Vorrichtung (60) führt;
wobei das Hauptgehäuse (10) eine Lufteinlassplatte (11) umfasst, wobei die Lufteinlassplatte (11) der Lufteinlassseite der Kühl-Heiz-Vorrichtung (60) entspricht;
wobei die Lufteinlassplatte (11) sich in eine vertikale Richtung erstreckt, wobei sich der Luftauslass des Führungsteils (50) an einem unteren Ende der Lufteinlassplatte (11) befindet,
**dadurch gekennzeichnet, dass**:
der Luftauslass des Führungsteils (50) nach oben gerichtet vorgesehen ist, so dass Frischluft, die aus dem Luftauslass des Führungsteils (50) geblasen wird, parallel zur Lufteinlassplatte (11) geleitet wird;
wobei ein Luftauslass des Führungsteils (50) außerhalb der Lufteinlassplatte (11) gelegen ist, so dass Frischluft, die aus dem Führungsteil (50) geleitet wird, durch die Lufteinlassplatte (11) in die Kühl-Heiz-Vorrichtung (60) eintritt.

2. Klimaanlageninnenraumeinheit nach Anspruch 1, wobei die Frischluftvorrichtung (20) Folgendes umfasst:
ein Frischluftgehäuse (30), wobei ein Frischluftdurchlass (31) und ein Schmutzluftdurchlass (32) im Frischluftgehäuse (30) angeordnet sind, und ein Frischlufteinlass (311) und ein Frischluftauslass (312), die mit dem Frischluftdurchlass (31) in Kommunikation stehen, auf dem Frischluftgehäuse (30) angeordnet sind, ein Schmutzlufteinlass (321) und ein Schmutzluftauslass (322), die mit dem Schmutzluftdurchlass (32) in Kommunikation stehen, auf dem Frischluftgehäuse (30) angeordnet sind; und
einen Wärmetauscher-Kernkörper (40), wobei der Wärmetauscher-Kernkörper (40) im Frischluftgehäuse (30) angeordnet ist und der Wärmetauscher-Kernkörper (40) mit dem Frischluftdurchlass (31) und dem Schmutzluftdurchlass (32) kommuniziert, so dass Frischluft, die sich im Frischluftdurchlass (31) befindet, und Schmutzluft, die sich im Schmutzluftdurchlass (32) befindet, Wärme im Wärmetauscher-Kernkörper (40) austauschen;
wobei der Führungsteil (50) mit dem Frischluftauslass (312) in Kommunikation steht, so dass Frischluft, die aus dem Frischluftauslass (312) strömt, durch den Führungsteil (50) zur Lufteinlassseite der Kühl-Heiz-Vorrichtung (60) geleitet wird.

3. Klimaanlageninnenraumeinheit nach Anspruch 1 oder Anspruch 2, wobei der Führungsteil (50) einen herausführenden Abschnitt (51) und eine Zugabschnitt (52) umfasst, wobei der herausführende Abschnitt (51) im Hauptgehäuse (10) angeordnet ist, der Zugabschnitt (52) außerhalb des Hauptgehäuses (10) angeordnet ist und der Zugabschnitt (52) mit dem herausführenden Abschnitt (51) kommuniziert.

4. Klimaanlageninnenraumeinheit nach Anspruch 3, wobei ein Ende des Zugabschnitts (52), entfernt vom herausführenden Abschnitt (51), mit einem Zugauslass (521) ausgestattet ist und der Zugauslass (521) der Luftauslass des Führungsteils (50) ist, so dass Frischluft im Führungsteil (50) aus dem Zugauslass (521) strömen kann.

5. Klimaanlageninnenraumeinheit nach Anspruch 4, wobei die Klimaanlageninnenraumeinheit ein Gitter (53) umfasst, das beim Zugauslass (521) angeordnet ist, und das Gitter (53) dazu konfiguriert ist, eine Richtung einzustellen, in der Frischluft aus dem Führungsteil (50) strömt.

6. Klimaanlageninnenraumeinheit nach Anspruch 4, wobei die Klimaanlageninnenraumeinheit eine Filtervorrichtung (54) umfasst, die beim Zugauslass (521) angeordnet ist, und die Filtervorrichtung (54) dazu konfiguriert ist, Frischluft zu filtern, die aus der Frischluftvorrichtung (20) strömt.

7. Klimaanlageninnenraumeinheit nach Anspruch 1, wobei das Hauptgehäuse (10) eine Lufteinlassplatte (11) umfasst, die Klimaanlageninnenraumeinheit ferner ein Strömungsleitplatte umfasst, die Strömungsleitplatte gegenüber der Lufteinlassplatte liegt und ein Frischlufteinlass-Durchlass zwischen der Strömungsleitplatte und der Lufteinlassplatte (11) gebildet ist.

8. Klimaanlage, umfassend eine Klimaanlageninnenraumeinheit und eine Klimaanlagenaußenraumeinheit, die mit der Klimaanlageninnenraumeinheit über eine Leitung verbunden ist, wobei die Klimaanlageninnenraumeinheit die Klimaanlageninnenraumeinheit nach einem der Ansprüche 1 bis 7 ist.

## Revendications

1. Unité d'intérieur de climatisation, comprenant un boîtier principal (10), un dispositif d'air frais (20) et un dispositif de réfrigération-chauffage (60), qui sont disposés dans le boîtier principal (10), le dispositif de réfrigération-chauffage (60) est doté d'un côté d'entrée d'air pour faire entrer de l'air, dans laquelle l'unité d'intérieur de climatisation comprend en outre :
une partie de guidage (50), dans laquelle la partie de guidage (50) communique avec le dispositif d'air frais (20), de sorte que l'air frais s'écoulant hors du dispositif d'air frais (20) entre dans la partie de guidage (50), et la partie de guidage (50) guide l'air frais vers le côté d'entrée d'air du dispositif de réfrigération-chauffage (60) ;
dans laquelle le boîtier principal (10) comprend un panneau d'entrée d'air (11), le panneau d'entrée d'air (11) correspond au côté d'entrée d'air du dispositif de réfrigération-chauffage (60) ;
le panneau d'entrée d'air (11) s'étend le long d'une direction verticale, la sortie d'air de la partie de guidage (50) est située sur une extrémité inférieure du panneau d'entrée d'air (11),
**caractérisée en ce que** :
la sortie d'air de la partie de guidage (50) est disposée vers le haut, de sorte que l'air frais soufflé depuis la sortie d'air de la partie de guidage (50) s'écoule parallèlement au panneau d'entrée d'air (11) ;
dans laquelle une sortie d'air de la partie de guidage (50) est située à l'extérieur du panneau d'entrée d'air (11), de sorte que l'air frais s'écoulant hors de la partie de guidage (50) entre dans le dispositif de réfrigération-chauffage (60) à travers le panneau d'entrée d'air (11).

2. Unité d'intérieur de climatisation selon la revendication 1, dans laquelle le dispositif d'air frais (20) comprend :
un boîtier d'air frais (30), dans laquelle un passage d'air frais (31) et un passage d'air viciévicié (32) sont disposés dans le boîtier d'air frais (30), et une entrée d'air frais (311) et une sortie d'air frais (312) qui communiquent avec le passage d'air frais (31) sont disposées sur le boîtier d'air frais (30), une entrée d'air viciévicié (321) et une sortie d'air viciévicié (322) qui communiquent avec le passage d'air viciévicié (32) sont disposées sur le boîtier d'air frais (30) ; et
un corps central d'échange thermique (40), dans laquelle le corps central d'échange thermique (40) est disposé dans le boîtier d'air frais (30), et le corps central d'échange thermique (40) communique avec le passage d'air frais (31) et le passage d'air viciévicié (32), de sorte que l'air frais situé dans le passage d'air frais (31) et l'air viciévicié situé dans le passage d'air viciévicié (32) échangent de la chaleur dans le corps central d'échange thermique (40) ;
dans laquelle la partie de guidage (50) communique avec la sortie d'air frais (312), de sorte que l'air frais s'écoulant hors de la sortie d'air frais (312) s'écoule vers le côté d'entrée d'air du dispositif de réfrigération-chauffage (60) à travers la partie de guidage (50).

3. Unité d'intérieur de climatisation selon la revendication 1 ou la revendication 2, dans laquelle la partie de guidage (50) comprend une partie de sortie (51) et une partie de traction (52), dans laquelle la partie de sortie (51) est disposée dans le boîtier principal (10), la partie de traction (52) est disposée à l'extérieur du boîtier principal (10), et la partie de traction (52) communique avec la partie de sortie (51) .

4. Unité d'intérieur de climatisation selon la revendication 3, dans laquelle une extrémité de la partie de traction (52) éloignée de la partie de sortie (51) est dotée d'une sortie de traction (521), la sortie de traction (521) est la sortie d'air de la partie de guidage (50) de sorte que l'air frais dans la partie de guidage (50) peut s'écouler depuis la sortie de traction (521).

5. Unité d'intérieur de climatisation selon la revendication 4, dans laquelle l'unité d'intérieur de climatisation comprend une grille (53) disposée au niveau de la sortie de traction (521), et la grille (53) est configurée pour ajuster une direction dans laquelle l'air frais s'écoule hors de la pièce de guidage (50).

6. Unité d'intérieur de climatisation selon la revendication 4, dans laquelle l'unité d'intérieur de climatisation comprend un dispositif de filtrage (54) disposé au niveau de la sortie de traction (521), et le dispositif de filtrage (54) est configuré pour filtrer l'air frais s'écoulant hors du dispositif d'air frais (20).

7. Unité d'intérieur de climatisation selon la revendication 1, dans laquelle le boîtier principal (10) comprend un panneau d'entrée d'air (11), l'unité d'intérieur de climatisation comprend en outre un déflecteur d'écoulement, le déflecteur d'écoulement est opposé au panneau d'entrée d'air, et un passage d'entrée d'air frais est formé entre le déflecteur d'écoulement et le panneau d'entrée d'air (11).

8. Climatiseur, comprenant une unité d'intérieur de climatisation et une unité d'extérieur de climatisation reliée à l'unité d'intérieur de climatisation par l'intermédiaire d'une canalisation, dans lequel l'unité d'intérieur de climatisation est l'unité d'intérieur de climatisation selon l'une quelconque des revendications 1 à 7.
